# EUROPEAN PATENT SPECIFICATION

(11) **EP 4 008 910 B1**
(45) Date of publication and mention of the grant of the patent: **16.10.2024**
(21) Application number: 20211186.0
(22) Date of filing: 02.12.2020
(51) Int. Cl.: F04D 29/26, A47J 43/07, F04D 29/28, F04D 29/58, H02K 9/06, H02K 7/10, H02K 7/116

(54) **ASSEMBLY METHOD, FAN-CLUTCH ARRANGEMENT, MOTOR-DRIVE UNIT AND KITCHEN MACHINE**
MONTAGEVERFAHREN, LÜFTER-KUPPLUNGS-ANORDNUNG, MOTORANTRIEBSEINHEIT UND KÜCHENMASCHINE
PROCÉDÉ D'ASSEMBLAGE, AGENCEMENT D'EMBRAYAGE DE VENTILATEUR, UNITÉ D'ENTRAÎNEMENT DE MOTEUR ET ROBOT CULINAIRE

(43) Date of publication of application: 08.06.2022
(73) Proprietor: BSH Hausgeräte GmbH, 81739 München (DE)
(72) Inventor: Golob, Jaka, 3330 Mozirje (SI)

(56) References cited:
- DE-A1- 102020 000 478
- DE-A1- 2 036 578
- DE-A1- 2 935 215
- GB-A- 2 078 340

## Description

The present invention concerns a method for assembling a fan on a drive shaft of a motor-drive-unit of a kitchen machine, a fan-clutch arrangement, an electric motor-drive unit for a kitchen machine and a kitchen machine.

As shown in the Chinese utility model CN 2077777233 U, electric driven kitchen machines such as cooking machines often has a fan in order to cool a motor-drive unit. Mostly, the fan is positioned on a drive shaft of a rotor of the electric motor.

In DE 2935215 A1 a rotary coupling for a drive motor shaft is shown. The coupling integrates a clutch for connecting an appliance of a kitchen machine and a fan and is fixedly connected to the shaft via a press fit. GB 2 078 340 A discloses another rotary coupling for a kitchen machine.

In known kitchen machines of the applicant, a motor-drive unit has two interfaces at opposite ends in order to attach an appliance. One interface is created by a fan-clutch arrangement which is provided on the rotor shaft, wherein the fan is used for cooling purposes and the clutch is configured to be connected with a respective appliance of the kitchen machine such as a blender. The fan is attached to the clutch via press fit and the clutch is attached to an adapter such as a sleeve or bushing via press fit as well. The adapter is attached to an end section of the rotor shaft via thread engagement.

It is an object of the present invention to provide an alternative technique allowing a tight fit of a fan and of a clutch on a drive shaft, a fan-clutch arrangement enabling a tight fit of the fan and of the clutch on a drive shaft, an electric motor-drive unit and a kitchen machine that fan and clutch is tightened to a drive shaft.

The object is solved by a method according to claim 1, a fan-clutch arrangement according to claim 3, an electric motor-drive unit according to claim 10 and a kitchen machine according to claim 11. Preferred embodiments are disclosed in the dependent claims, the description and the figures.

According to the invention, a method for assembling a fan on a drive shaft of an electric motor-drive-unit of a kitchen machine, wherein the fan is positioned on a clutch provided to connect an appliance to the drive shaft, comprising the following steps:
- holding the clutch on an end section of the drive shaft via press fit directly or indirectly, and
- holding the fan on the clutch via form fit.

As the fan is held in place via form fit and not via press fit, a replacement of the fan is simplified. Thereby, a tight fit is guaranteed. By means of this, different fans can be engaged thus enabling individual fan designs which are adapted to separate motor performances. A modification of the clutch can be omitted, thus reducing technical complexity. Disassembling the clutch is not necessary. "Directly or indirectly" means that either the clutch is pressed directly on the end section or, alternatively, the clutch is positioned on the end section via at least one adapter whereas the clutch is attached to the at least one adapter via press fit.

Preferably, the adapter is a sleeve and held on the end section of the drive shaft via press fit. Due to this, thread engagement can be omitted, thus simplifying the manufacturing and the assembly.

According to the invention, a fan-clutch arrangement of an electric motor-drive unit of a kitchen machine, comprises a fan in order to cool the motor-drive unit and a clutch in order to connect an appliance to the drive unit. The clutch is held via press fit on an end section of a drive shaft, and the fan is held via form fit on the clutch. By means of this, a tight fit of a fan and of a clutch on a drive shaft is provided whereas changing the fan is simplified. An example for a form fit is a so-called "snap and click connection".

In a preferred embodiment, the clutch is mounted to the drive shaft via at least one adapter, for instance a sleeve which is in press fit with both, the end section of the drive shaft and the clutch. Due to this, thread engagement can be omitted, thus simplifying the manufacturing and the assembly. In order to prevent a slippage in the unlikely event that the press fit might become loose, the adapter might have an adequate outer contour such as longitudinal projections extending in mounting direction of the clutch. Alternatively, and/or in addition, the clutch can be provided with an adequate inner contour.

Preferably, the clutch has a first part acting together with the fan and a second part acting together with the appliance. As the fan and the appliance are not acting on the same parts, both parts can be optimised for their individual function. For instance, the first part is a radial outer collar and the second part is a radial inner hub for the appliance. If the parts are positioned on different diameters, they can project in the same direction, thus enabling a compact axial extension of the clutch.

Preferably, the fan can have a radial outer wheel with a plurality of air wings and a radial inner hub for acting together with one part of the clutch By means of this, an effective colling and a tight positioning is enabled.

In order to prevent a rotational slippage between the clutch and the fan, first elements of the first part of the clutch and first counter elements of the fan hub are provided. In order to prevent an axial slippage between the first part of the clutch and the fan hub, second elements of the clutch and second counter elements of the fan are provided. As a rotational slippage and an axial slippage is prevented by different parts and elements, respectively, the respective parts and elements can be optimised for their individual function.

Preferably, the first elements are longitudinal recesses and the first counter elements corresponding longitudinal projections or vice versa.

The second elements are preferably elastic tongues each having a hooked end and the second counter elements corresponding recesses, thus enabling a so-called "snap and click connection" which enables a tight fit and which can easily be disengaged.

A preferred electric motor-drive unit for a kitchen machine has a fan-clutch arrangement according to the invention. The fan-clutch arrangement enables a tight fit to a drive shaft and an easy replacement of the fan.

A preferred kitchen machine has an electric motor-drive unit with a fan-clutch arrangement according to the invention. The fan-clutch arrangement enables a tight fit to a drive shaft and an easy replacement of the fan.

In the following, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure. Shown is schematically in
- Figure 1:: a perspective view on an exemplary electric motor-drive unit of a kitchen machine according to the invention,
- Figure 2: an exploded view of a rotor of the motor-drive unit,
- Figure 3:: a sectional view of the rotor in an exploded illustration in axial direction (longitudinal direction),
- Figure 4:: a sectional view in axial direction of an end section of the rotor carrying a preferred clutch and a preferred adapter,
- Figure 5: a perspective view of the preferred adapter,
- Figure 6: a perspective front view of the preferred clutch,
- Figure 7: a perspective back view of the preferred clutch,
- Figure 8: a perspective front view of an embodiment of a fan according to the invention,
- Figure 9: a perspective back view of a fan-clutch arrangement according to the invention,
- Figure 10: a perspective side view of a further embodiment of a fan according to the invention, and
- Figure 11: a perspective side view of a further embodiment of a fan according to the invention.

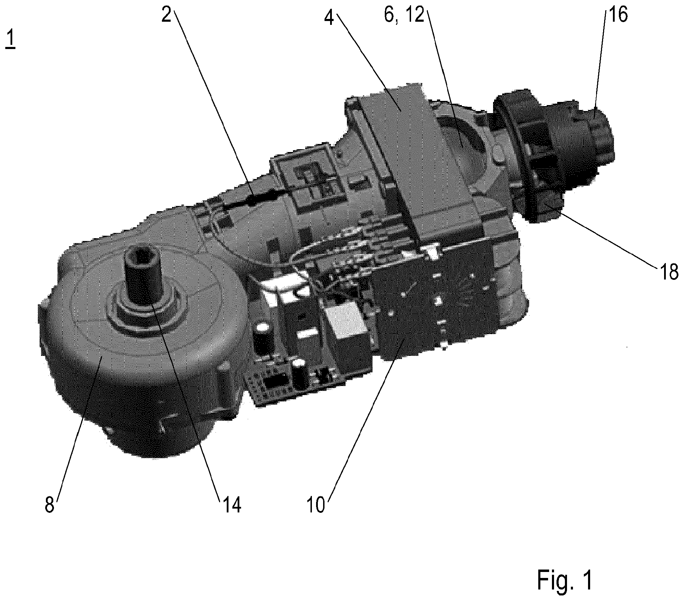

In figure 1, a perspective view of an electric motor-drive unit 1 of a kitchen machine such as a cooking machine is shown. The motor-drive unit comprises a motor casing 2 having a stator 4 and a rotatable rotor 6 included, a gear box 8 and an electric control unit 10.

The rotor 6 has a drive shaft 12 that on its first end section is in connection with a rotatable gear shaft of the gear box 8 in order to form a first interface 14 for engaging an appliance. On its opposite second end section, the drive shaft 12 has a second interface 16 configured to be engaged with a second appliance such as a blender. The first and second interface 14, 16 are couplings or clutches, respectively, enabling an interlocking or form fit, that means mechanically and by geometry, with counter parts of the appliances. In order to prevent the motor-drive unit 1 from overheating, a fan 18 for cooling purposes is provided. The fan 18 is positioned at the second end section of the drive shaft 12 and such engaged to the drive shaft 12 that both the drive shaft 12 and the fan 18 has the same rotational speed.

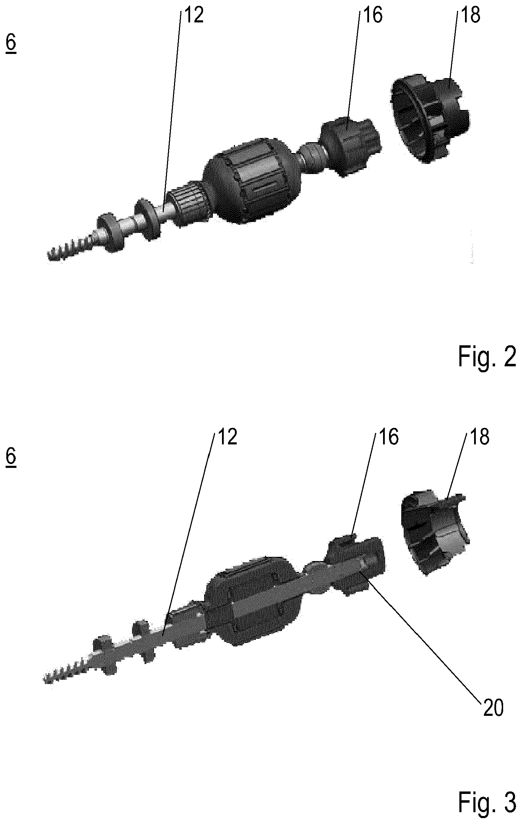

As can been seen in figures 2 and 3, the fan 18 is positioned on the second interface, respectively on the clutch 16, and the clutch 16 is positioned on the second end section of the drive shaft 12 via an adapter 20 such as a sleeve. The fan 18 and the clutch 16 are forming a kind of fan-clutch arrangement wherein the fan 18 is releasable attached to the clutch 16 via form fit and the clutch 16 is attached to the sleeve 20 via press fit. The sleeve 20 is then again attached to the second end section of the drive shaft 12 via press fit.

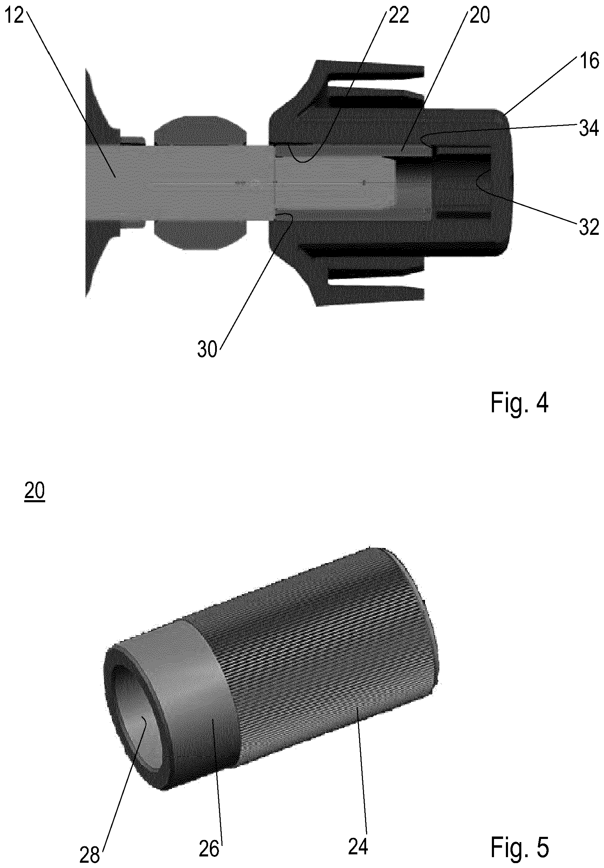

As can be seen in more detail in figures 4 and 5, the sleeve 20 is inserted into an axial cylindrical recess 22 of the clutch 16. In order to support the press fit arrangement between the sleeve 22 and the clutch 16, at its outer surface the sleeve 20 has a plurality of longitudinal projections 24 extending in axial direction, respectively mounting direction, of the sleeve 20 and the clutch 16, respectively. Preferably, the longitudinal projections 24 do not extend over the whole axial length of the sleeve 20, but an outer surface area 26 at the front-end side of the sleeve 20 has a blank outer surface. An inner surface 28 of a through hole of the sleeve 20 is preferably smooth and prepared adequately for the press fit arrangement.

In order to align the sleeve 20 and the clutch 16 axially, the second end section of the drive shaft 12 has a radial outer shoulder 30 forming a stop for the front-end side of the sleeve 20, and the axial cylindrical recess 22 of the clutch 16 has a radial inner shoulder 34 near its bottom 32 forming a stop when acting together with an opposite back-end side of the sleeve 20.

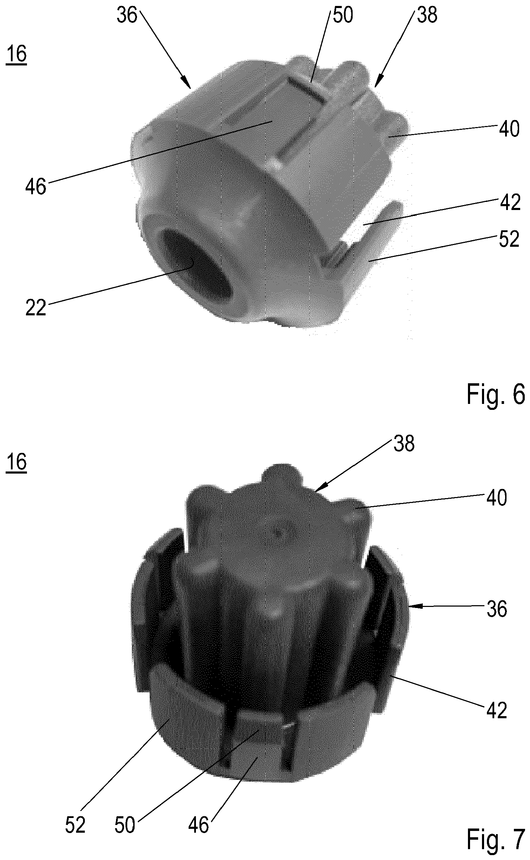

According to figures 6 and 7, the clutch 16 has a first part 36 and a second part 38. The first part 36 is a radial outer collar and the second part 38 is a radial inner hub of the clutch 16. The collar 36 surrounds the hub 38, whereas both the collar 36 and the hub 38 are extending in the same axial direction and have different functions. Whereas the collar 36 is configured to hold the fan 18 via releasable form fit, the hub 38 is configured to receive the sleeve 20 via press-fit and to engage the second appliance. In order to receive the sleeve 20, the cylindrical recess 22 is positioned in the hub 38. In order to engage the second appliance, the outer surface of the hub 38 is provided with longitudinal projections 40 extending in axial direction.

The collar 36 comprises first elements 42 which are configured to act together with corresponding first counter elements 44 of the fan 18. In the shown embodiment, the first elements are longitudinal recesses 42 which extends over the entire axial length of the collar 36 and which are evenly distributed over the circumference of the collar 36. Here, three longitudinal recesses 42 are provided.

The collar 36 also comprises second elements 46 which are configured to act together with second counter elements 48 of the fan 18. In the shown embodiment, the second elements are elastic tongues 46 extending over the entire axial length of the collar 36 and which are evenly distributed over the circumference of the collar 36. Here, three elastic tongues 46 are provided. At their free ends, each tongue 46 has a hooked end 50 which is directed radially outwards.

Between the first and second elements 42, 46 of the collar 36, rigid wall 52 sections are provided.

Both the first and the second elements 42, 46 has different functions. The first elements 42 in cooperation with the rigid wall elements 52 are provided in order to prevent rotational slippage between the clutch 16 and the fan 18, the second elements 46 comprising the hooked ends 50 are provided in order to prevent axial slippage between the clutch 16 and the fan 18.

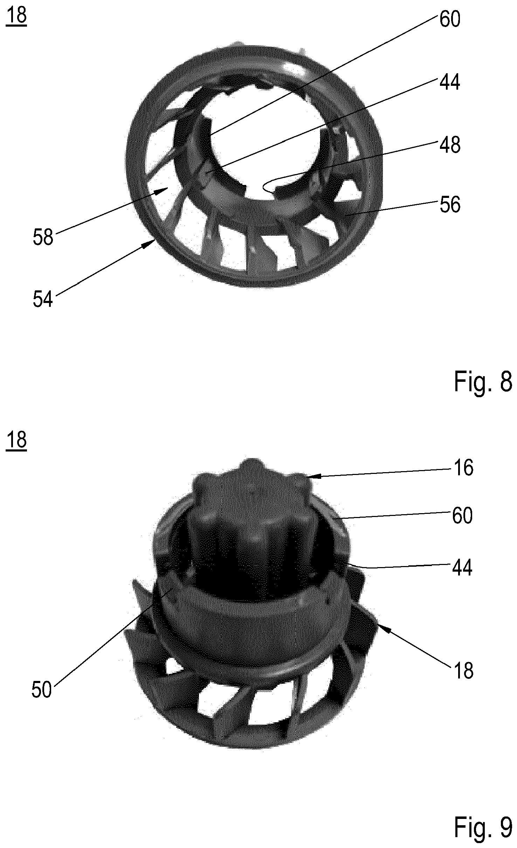

In figure 8 an embodiment of a fan 18 according to the invention is shown. The fan 18 has a radial outer wheel 54 with a plurality of air wings 56 and a radial inner hub 58. The wheel 54 and the hub 58 aligned axially to each other and arranged one after the other, whereby the wheel 54 is connected with a front side of the hub 58 via its back side. The wheel 54 is used for cooling purposes and the hub 58 is used for engaging the fan 18 via form fit to the collar 36 of the clutch 16. The hub 58 comprises the aforementioned first counter elements 44 and the second counter elements 48.

The first counter elements are longitudinal projections 44 corresponding to the longitudinal recesses 42 of the clutch 16. They extend over the entire axial length of the hub 58 and are evenly distributed over its circumference. Here, three longitudinal recesses 44 are provided.

The second counter elements are radial recesses 48 in a bottom ring 60 of the hub 58. The bottom ring 60 extends radially inwardly and forms an axial stop when the fan18 is in form fit engagement with the clutch 16. The radial recesses 48 extend over the entire radial extension of the bottom ring 60 an correspond the hooked ends 50 of the elastic tongues 46 of the clutch 16. They are evenly distributed over the circumference of the hub 58. Here, three radial recesses 48 are provided.

With reference to figure 9, when the fan 18 and the clutch 16 are in form fit engagement and forming the fan-clutch arrangement, the longitudinal projections 44 of the fan 18 are introduced into the longitudinal recesses 42 of the collar 36, thus preventing rotational slippage between the fan 18 and the clutch 16. The hooked ends 50 of the elastic tongues 46 are introduced into the radial recesses 48 of the fan 18 and the collar 36 abuts with its back side of its collar 36 against the bottom ring 60 of the fan hub 18, thus preventing axial slippage and enabling a releasable disassembling of the fan 18.

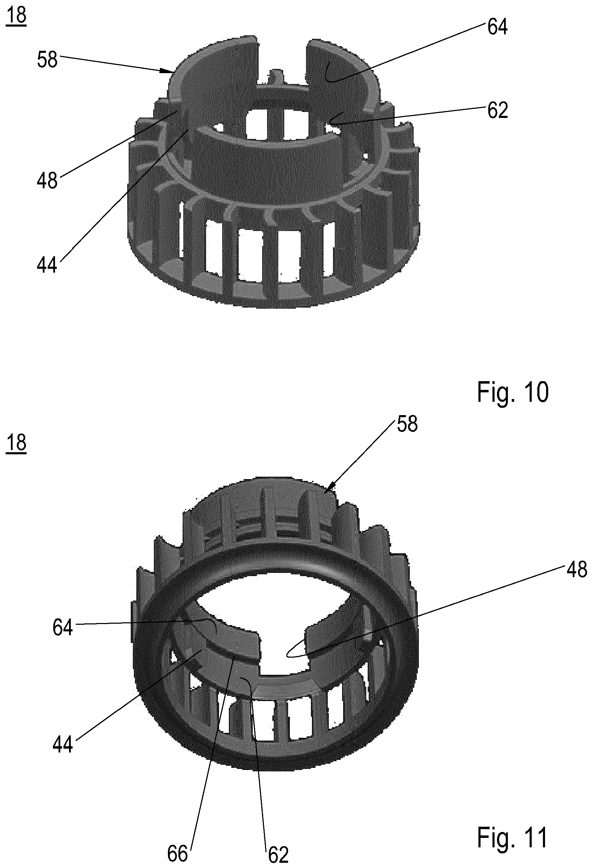

In figure 10, a further embodiment of a fan 18 according to the invention is shown. Although this embodiment shows a different wheel design and a different hub design, the fan 18 is configured to be engaged with the same collar 36 of the clutch 16 via releasable form fit.

In this embodiment, the hub 58 of the fan 18 has an front inner surface 62 with a conical shape that passes over in an inner back cylindrical surface 64. Longitudinal projections 44 acting as first counter elements extend over the entire length of the front inner surface 62 and end at the cylindrical surface 64. Preferably, they end stepless at the cylindrical surface 64 and do not extend radially over it. The front inner surface 62 is configured to form an axial assembling stop for the fan 18 on the collar 36 of the clutch 16.

Longitudinal recesses 48 acting as second counter elements extend over the entire length of the hub 58 and thus over both the conical surface 62 and the cylindrical surface 64.

In figure 11, a further embodiment of a fan 18 according to the invention is shown. Again, although this embodiment shows a different wheel design and a different hub design, the fan 18 is configured to be engaged with the same collar 36 of the clutch 16 via releasable form fit.

In main difference to the embodiment of figure 10, the fan 18 according to this embodiment has not only a back inner cylindrical surface 64, but also a front inner surface 62 with a cylindrical shape. The front inner surface 62 carries longitudinal projections 44 acting as first counter elements extend over the entire length of the front inner surface 62.

The front inner surface 62 has a larger radial diameter as the back cylindrical surface 64 such that a shoulder 66 is formed in their transition region providing an axial assembling stop for the fan 18 on the collar 36 of the clutch 16. Preferably, the longitudinal projections 44 are ending stepless at the back cylindrical surface 64 and do not extend radially over it.

Longitudinal recesses 48 acting as second counter elements extend over the entire length of the hub 58 and thus over both the front inner surface 62 and the back cylindrical surface 64.

In a preferred assembly method according of the invention, the clutch 16 is pressed on the sleeve 20 and the sleeve 20 equipped with the clutch 16 is then pressed on the end section of the rotor shaft 12 as a part of the rotor assembly. The fan 18 is mounted via form fit on the clutch 20 at an end station of the assembly.

Preferably, the clutch 16 and the fan 18 are plastic parts made by plastic injection moulding, for instance, and the sleeve 20 is a metal part.

Disclosed is a fan-clutch arrangement of a motor-drive unit 1 of a kitchen machine, comprising a fan 18 in order to cool the motor-drive unit 1, a clutch 16 in order to connect an appliance to the motor-drive unit 1, wherein the clutch 16 is held via press fit on an end section of a drive shaft 12, and the fan 18 is held via form fit on the clutch 16, an assembly method, an electric motor-drive unit 1 and a kitchen machine.

### Reference signs

- 1: motor-drive unit
- 2: casing
- 4: stator
- 6: rotor
- 8: gear box
- 10: electric control unit
- 12: drive shaft
- 14: first interface
- 16: second interface: here a clutch
- 18: fan
- 20: adapter such as sleeve or bushing
- 22: cylindrical recess
- 24: longitudinal projection on sleeve
- 26: outer surface area
- 28: inner surface
- 30: outer shoulder
- 32: bottom
- 34: inner shoulder
- 36: first part, here: radial outer collar of the clutch
- 38: second part, here: radial inner hub of the clutch
- 40: longitudinal projection on hub of the clutch
- 42: First element, here: longitudinal recesses of the clutch collar
- 44: First counter element, here: corresponding longitudinal projections of the fan hub
- 46: Second element, here: elastic tongues of the clutch collar
- 48: Second counter element, here: corresponding radial recesses of the fan hub
- 50: hooked end
- 52: wall sections
- 54: wheel
- 56: air wing
- 58: hub of the fan
- 60: bottom ring
- 62: front inner surface
- 64: back cylindrical surface
- 66: shoulder

## Claims

1. A method for assembling a fan (18) on a drive shaft (12) of an electric motor-drive-unit (1) of a kitchen machine, wherein the fan (18) is positioned on a clutch (16) provided to connect an appliance to the drive shaft (12), comprising the steps:
- holding the clutch (16) on an end section of the drive shaft (12) via press fit directly or indirectly, and
- holding the fan (18) on the clutch (16) via form fit.

2. Method according to claim 1, wherein the clutch (16) is pressed on at least one adapter (20) which is held on the end section of the drive shaft (12) via press fit.

3. A fan-clutch arrangement for an electric motor-drive unit (1) of a kitchen machine, comprising
- a fan (18) in order to cool the motor-drive unit (1),
- a clutch (16) in order to connect an appliance to the motor-drive unit (1),
wherein
- the clutch (16) is held via press fit on an end section of a drive shaft (12), and
- the fan (18) is held via form fit on the clutch (16).

4. Fan-clutch arrangement according to claim 3, wherein the clutch (16) is mounted to the drive shaft (12) via at least one adapter (20) which is in press fit with both, the end section of the drive shaft (12) and the clutch (16).

5. Fan-clutch arrangement according to claims 3 or 4, wherein the clutch (16) has a first part (36) acting together with the fan (18) and a second part (38) acting together with the appliance.

6. Fan-clutch arrangement according to claim 5, wherein the fan (18) has a radial outer wheel (54) with a plurality of air wings (56) and a radial inner hub (58) for acting together with one part (36, 38) of the clutch (16).

7. Fan-clutch arrangement according to claim 6, wherein a rotational slippage between the clutch (16) and the fan (18) is prevented by first elements (42) of the first part (36) of the clutch (16) and first counter elements (44) of the fan hub (58) and an axial slippage between the first part (36) of the clutch (16) and the fan (18) is prevented by second elements (46) of the clutch (36) and second counter elements (48) of the fan hub (58).

8. Fan-clutch arrangement according to claim 7, wherein the first elements (42) are longitudinal recesses and the first counter elements (44) are corresponding longitudinal projections.

9. Fan-clutch arrangement according to claim 7 or 8, wherein the second elements (46) are elastic tongues each having a hooked end (50) and the second counter elements (48) are corresponding recesses.

10. An electric motor-drive unit (1) for a kitchen machine with a fan-clutch arrangement according to one of the preceding claims.

11. A kitchen machine having an electric motor-drive unit (1) according to claim 10.

## Patentansprüche

1. Verfahren zum Montieren eines Lüfters (18) an eine Antriebswelle (12) einer Elektromotorantriebseinheit (1) einer Küchenmaschine, wobei der Lüfter (18) an einer Kupplung (16) angeordnet ist, die zum Verbinden eines Geräts mit der Antriebswelle (12) vorgesehen ist, mit folgenden Schritten:
- direktes oder indirektes Halten der Kupplung (16) an einem Endabschnitt der Antriebswelle (12) durch Presssitz und
- formschlüssiges Halten des Lüfters (18) an der Kupplung (16).

2. Verfahren nach Anspruch 1, wobei die Kupplung (16) auf mindestens einen Adapter (20) gepresst wird, der durch Presssitz an dem Endabschnitt der Antriebswelle (12) gehalten wird.

3. Lüfter-Kupplung-Anordnung für eine Elektromotorantriebseinheit (1) einer Küchenmaschine mit Folgendem:
- einem Lüfter (18) zum Kühlen der Motorantriebseinheit (1),
- einer Kupplung (16) zum Verbinden eines Geräts mit der Motorantriebseinheit (1),
wobei
- die Kupplung (16) durch Presssitz an einem Endabschnitt einer Antriebswelle (12) gehalten wird und
- der Lüfter (18) formschlüssig an der Kupplung (16) gehalten wird.

4. Lüfter-Kupplung-Anordnung nach Anspruch 3, wobei die Kupplung (16) über mindestens einen Adapter (20), der auf beide, den Endabschnitt der Antriebswelle (12) und die Kupplung (16), aufgepresst ist, an die Antriebswelle (12) montiert ist.

5. Lüfter-Kupplung-Anordnung nach Anspruch 3 oder 4, wobei die Kupplung (16) einen ersten Teil (36) aufweist, der mit dem Lüfter (18) zusammenwirkt, und einen zweiten Teil (38), der mit dem Gerät zusammenwirkt.

6. Lüfter-Kupplung-Anordnung nach Anspruch 5, wobei der Lüfter (18) ein radial außenliegendes Rad (54) mit mehreren Lüfterflügeln (56) und eine radial innenliegende Nabe (58) zum Zusammenwirken mit einem Teil (36, 38) der Kupplung (16) aufweist.

7. Lüfter-Kupplung-Anordnung nach Anspruch 6, wobei ein Rutschen in Drehrichtung zwischen der Kupplung (16) und dem Lüfter (18) durch erste Elemente (42) an dem ersten Teil (36) der Kupplung (16) und erste Gegenelemente (44) an der Lüfternabe (58) und ein Rutschen in axialer Richtung zwischen dem ersten Teil (36) der Kupplung (16) und dem Lüfter (18) durch zweite Elemente (46) an der Kupplung (36) und zweite Gegenelemente (48) an der Lüfternabe (58) verhindert wird.

8. Lüfter-Kupplung-Anordnung nach Anspruch 7, wobei es sich bei den ersten Elementen (42) um längs verlaufende Aussparungen und bei den ersten Gegenelementen (44) um entsprechende längs verlaufende Vorsprünge handelt.

9. Lüfter-Kupplung-Anordnung nach Anspruch 7 oder 8, wobei es sich bei den zweiten Elementen (46) um elastische Zungen handelt, die jeweils ein hakenförmiges Ende (50) aufweisen, und bei den zweiten Gegenelementen (48) um entsprechende Aussparungen.

10. Elektromotorantriebseinheit (1) für eine Küchenmaschine mit einer Lüfter-Kupplung-Anordnung nach einem der vorhergehenden Ansprüche.

11. Küchenmaschine mit einer Elektromotorantriebseinheit (1) nach Anspruch 10.

## Revendications

1. Procédé de montage d'un ventilateur (18) sur un arbre d'entraînement (12) d'un bloc d'entraînement à moteur électrique (1) d'un robot de cuisine, dans lequel le ventilateur (18) est positionné sur un embrayage (16) prévu pour connecter un appareil à l'arbre d'entraînement (12), comprenant les étapes :
- blocage de l'embrayage (16) sur une section terminale de l'arbre d'entraînement (12) par ajustement serré directement ou indirectement, et
- blocage du ventilateur (18) sur l'embrayage (16) par ajustement de forme.

2. Procédé selon la revendication 1, dans lequel l'embrayage (16) est pressé sur au moins un adaptateur (20) qui est bloqué sur la section terminale de l'arbre d'entraînement (12) par un ajustement serré.

3. Agencement de ventilateur-embrayage pour un bloc d'entraînement à moteur électrique (1) d'un robot de cuisine, comprenant :
- un ventilateur (18) destiné à refroidir le bloc d'entraînement à moteur (1),
- un embrayage (16) destiné à connecter un appareil au bloc d'entraînement à moteur (1),
dans lequel
- l'embrayage (16) est bloqué par ajustement serré sur une section terminale d'un arbre d'entraînement (12), et
- le ventilateur (18) est bloqué par ajustement de forme sur l'embrayage (16).

4. Agencement de ventilateur-embrayage selon la revendication 3, dans lequel l'embrayage (16) est monté sur l'arbre d'entraînement (12) par au moins un adaptateur (20) qui est en ajustement serré avec à la fois la section terminale de l'arbre d'entraînement (12) et l'embrayage (16).

5. Agencement de ventilateur-embrayage selon les revendications 3 ou 4, dans lequel l'embrayage (16) comprend une première partie (36) agissant ensemble avec le ventilateur (18) et une deuxième partie (38) agissant ensemble avec l'appareil.

6. Agencement de ventilateur-embrayage selon la revendication 5, dans lequel le ventilateur (18) comprend une roue extérieure radiale (54) comportant une pluralité d'ailettes d'air (56) et un moyeu intérieur radial (58) pour agir ensemble avec une partie (36, 38) de l'embrayage (16).

7. Agencement de ventilateur-embrayage selon la revendication 6, dans lequel un glissement en rotation entre l'embrayage (16) et le ventilateur (18) est empêché par des premiers éléments (42) de la première partie (36) de l'embrayage (16) et des premiers contre-éléments (44) du moyeu de ventilateur (58) et un glissement axial entre la première partie (36) de l'embrayage (16) et le ventilateur (18) est empêché par des deuxièmes éléments (46) de l'embrayage (36) et des deuxièmes contre-éléments (48) du moyeu de ventilateur (58).

8. Agencement de ventilateur-embrayage selon la revendication 7, dans lequel les premiers éléments (42) sont des gorges longitudinales et les premiers contre-éléments (44) sont des saillies longitudinales correspondantes.

9. Agencement de ventilateur-embrayage selon la revendication 7 ou 8, dans lequel les deuxièmes éléments (46) sont des languettes élastiques comprenant chacune une extrémité en forme de crochet (50) et les deuxièmes contre-éléments (48) sont des gorges correspondantes.

10. Bloc d'entraînement à moteur électrique (1) pour un robot de cuisine comprenant un agencement ventilateur-embrayage selon l'une quelconque des revendications précédentes.

11. Robot de cuisine comprenant un bloc d'entraînement à moteur électrique (1) selon la revendication 10.
